# EUROPEAN PATENT APPLICATION

(11) **EP 2 073 443 A1**
(43) Date of publication of application: **24.06.2009**
(21) Application number: 08715292.2
(22) Date of filing: 21.03.2008
(51) Int. Cl.: H04L 12/28, H04L 12/24, H04L 9/32

(54) **COMMUNICATION SYSTEM, COMMUNICATION DEVICE AND CAPABILITY CONTROL METHOD**

(30) Priority: 16.04.2007 CN 200710096930
(71) Applicant: Huawei Technologies Co., Ltd., Longgang District, Shenzhen Guangdong 518129 (CN)
(72) Inventor: CHENG, Lin, Shenzhen Guangdong 518129 (CN)
(74) Representative: Thun, Clemens
(86) International application number: PCT/CN2008/070556
(87) International publication number: WO 2008/125042

(57) **Abstract**

A communication system includes a server for capability control, with a capability control file currently used by a corresponding device being provided in the server. The server includes a capability determination unit adapted to determine whether the summarization of the capabilities currently used by all the devices under the control of the server exceeds the capabilities limited by the capability control file; and a prohibition command sending unit adapted to send to the device a capability prohibition command corresponding to the capabilities. The device includes a capability prohibition unit adapted to prohibit the subsequent usage of the capabilities after receiving the prohibition command. The invention further provides a corresponding control method and communication device. By employing the invention, the structure of a system for capability control may be simplified, and the time delay caused by the normal service configuration and operation of the communication device may be avoided.

## Description

### Cross-reference to Related Applications

This application claims the priority to Chinese Patent Application No. 200710096930.1, filed on April 16, 2007, titled "COMMUNICATION SYSTEM, COMMUNICATION DEVICE, AND METHOD FOR CAPABILITY CONTROL", which is incorporated herein by reference in its entirety.

### Field of the Invention

The present invention relates to the field of communications, and in particular, to a communication system, communication device and method for capability control.

### Background of the Invention

In some cases, in order to control the cost, telecommunication operators usually do not necessarily require a communication device to have too many functions and too much capacity, while device suppliers usually control the function and capacity of various devices in the network in the way of capability control (for example, License).

In the early stage of the networking of a communication network, such a License mode is particularly realized as follows: the device supplier generates for the operator a License file according to the authorization information required by different operators, in which only part of the functions and predetermined capacity are opened. The operator only needs to pay for the open part of the functions and capacity. If the operator requires more functions and capacity subsequently, more functions and capacity can be opened in the way of updating, by the device supplier, the License file after the operator pays a License authorization fee to the device supplier.

A License file is a binary encrypted file conforming to a certain format and specification, where the capability (function information and capacity information) of a network element device is defined. The function information specifies whether the network element device supports a certain function, and the capacity information specifies the specific number of the respective resources used by the network element device. In addition to the capability of the network element device, in order to prevent the License file from being used illegally, the ID of the device using the License file (License server) is further recorded in the License file during the generation process of the License file, and only this device can use the License file.

The License mode may be applied in various communication devices, for example, access device. The initial License mode is a single unit control solution. The single unit control solution is mainly realized as follows: only the function and capacity control information of one access device are defined in the License file; as such, the device ID recorded in the License file is the ID of this communication device; and the License file can only be loaded to the communication device uniquely via the ID. During the service configuration and operation process, the communication device needs to read the capability control information from the License file when capability determination is involved. If it is specified in the License file that the function is unauthorized or the capacity actually used by the device exceeds the number specified in the License file, the device provides an alarm indication or even halts the configuration and operation of the service. In the employment of the single unit control solution, there is a need to generate one License file for each access device.

In order to overcome the technical defect of loading or applying for a License file in the single unit control solution, a centralized License control solution is put forward in the prior art.

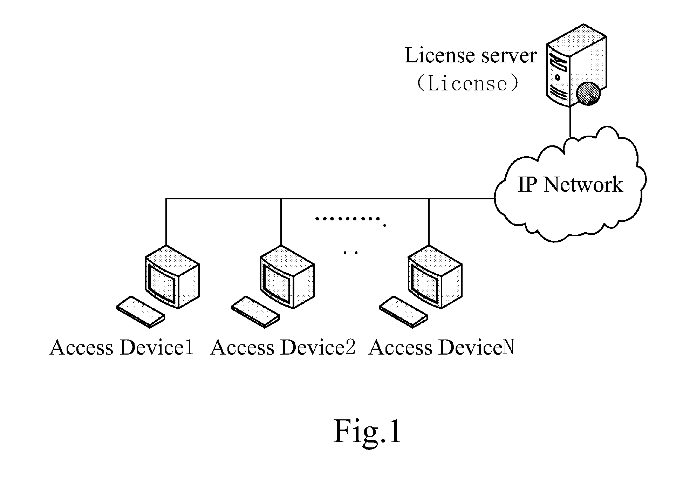

Referring to Fig.1, taking an access network as an example, the basic solution of the centralized License control is as follows. The capabilities of all the access devices of the same product within a certain range of the access network (for example, a city or a region) are all defined in one License file. The product name is recorded in the License file, but the License file is no longer bound to a specific access device. Instead, the License file is bound to a License server in which the License file is saved. The License file is only saved in the License server, with the device ID of the License server being recorded in the License file. Thus, the License file is no longer saved in the access device itself and is saved in the License server instead.

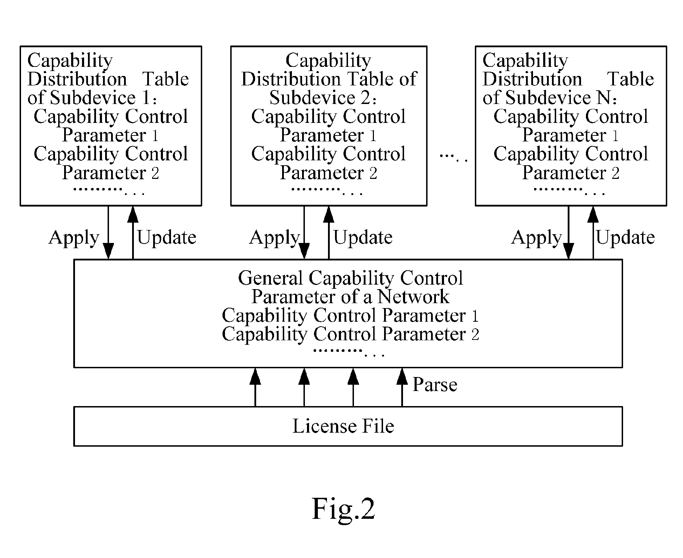

Referring to Fig.2, an existing specific solution of the centralized License control solution is shown. In the solution, the License file is saved in the License server, and the total capability collection of all the access devices in the whole network is defined in the License file. The License server is responsible for parsing the License file to obtain the general capability control parameters of all the access devices, which are equivalent to a resource pool for the capability distribution of all the access devices. Each access device can apply for a capability from the resource pool to form a capability distribution table of the access device. The capability distribution table of each access device is also saved in the License server. The summarization of the capabilities distributed to all the access devices does not exceed the capability summarization obtained by parsing the License file.

In the centralized control solution, the access device controls the capability of itself according to the capability distribution table saved in the access device itself, and it can reapply for a new capability from the License server when the distributed capability does not meet the requirements. Because the License file is only bound to the device ID of the License server, when a failure occurs and a failed access device needs to be replaced, the corresponding License file does not need to be re-updated. Additionally, when the capabilities between various access devices need to be adjusted, this can be done only by adjusting the respective capability distribution tables of various access devices in the License server and then redelivering the respective capability distribution tables to the respective access devices.

During the research and development process, the inventors find the following fact in the existing centralized capability control technology. The communication device needs to save a capability distribution table. The communication device needs a dedicated module responsible for parsing the capability distribution table to control the capability of the communication device itself. In the case that the capability specified in the updated capability distribution table is less than the capabilities implemented by the communication device, the capability control is very complicated. During the service configuration and operation process; if the communication device finds that all the capabilities in the capability distribution table have been used, there is a need for the communication device to apply for a new capability from the License server, causing a time delay in the normal service configuration and operation.

### Summary of the Invention

The embodiments of the invention provide a communication system, communication device and method for capability control thereof, and therefore the structure can be simplified and the normal service configuration and operation is not influenced during capability control.

One embodiment of the invention provides a communication system including a server for capability control. The server includes a summarizing unit, a capability determination unit and a prohibition command sending unit.

The server communicates with at least one communication device including a capability upload unit and a capability prohibition unit.

The summarizing unit is adapted to collect and summarize capabilities currently used by the communication device and send a summarization result to the capability determination unit.

The capability determination unit is adapted to compare the summarization result with the capabilities specified in a license file and obtain a comparison result.

The prohibition command sending unit is adapted to send to the communication device, when the comparison result indicates that the summarization result equals or exceeds the capabilities specified in the license file, a capability prohibition command corresponding to the capabilities.

The capability upload unit is adapted to report, to the server connected to the communication device, information about the capabilities currently used by the communication device.

The capability prohibition unit is adapted to prohibit the communication device from using the corresponding capabilities according to the capability prohibition command delivered by the server.

One embodiment of the invention further provides a server for capability control including a summarizing unit, a capability determination unit and a prohibition command sending unit.

The summarizing unit is adapted to collect and summarize the capabilities currently used by each communication device connected to the server and send to the capability determination unit a summarization result.

The capability determination unit is adapted to compare the summarization result with the capabilities specified in a license file and obtain a comparison result.

The prohibition command sending unit is adapted to send, when the comparison result indicates that the summarization result equals or exceeds the capabilities specified in the license file, a capability prohibition command corresponding to the capabilities to each of the communication devices.

One embodiment of the invention provides a communication device including a capability upload unit and a capability prohibition unit.

The capability upload unit is adapted to upload the capability information currently used by the communication device to a server connected to the communication device.

The capability prohibition unit is adapted to prohibit the communication device from using the corresponding capabilities according to a capability prohibition command delivered by the server.

One embodiment of the invention provides a method for capability control including the steps of: obtaining the capabilities currently used by each communication device connected to a server; summarizing the capability currently used by each of the communication devices and comparing the summarization result with the capabilities specified in the license file; and prohibiting, when the summarization result equals or exceeds the capabilities specified in the license file, each of the communication devices from subsequent additional usage of the capabilities.

It may be seen from the above technical solutions that the current capability usage situation of all the communication devices is firstly determined on the server and then, according to this capability usage situation, the capability usage of the communication devices is controlled directly. Therefore, relative to the mode in the prior art which requires the server to deliver a capability distribution table to the access devices, the step of delivering a capability distribution table to the device is not needed in the present embodiments, nor is the step of specially parsing the capability distribution table. Instead, the device is controlled simply and directly. As a result, the process can be simplified, the capability control may be realized, and at the same time the complex capability application process of the device may be avoided, and further the time delay of the normal service configuration and operation may be avoided.

### Brief Description of the Drawings

Fig.1 is a functional block diagram of a centralized License control system in the prior art;

Fig.2 is a functional block diagram of a further centralized License control system in the prior art;

Fig.3 is a flow chart of the method for capability control according to a second embodiment of the invention;

Fig.4 is a functional block diagram of a communication system according to the second embodiment of the invention;

Fig.5 is a functional block diagram of the communication device according to a third embodiment of the invention; and

Fig.6 is a functional block diagram of the communication device according to a fourth embodiment of the invention.

### Detailed Description of the Embodiments

In view of the problems and defects in the prior art, the concept of the invention and the solution thereof are put forward.

The first embodiment of the invention provides a communication system, which includes a server and a device connected to it. The server includes: a capability determination unit adapted to determine the current capability usage situation of the device connected to the server; and a capability control unit adapted to control the capability usage of the device according to the capability situation.

Instead of the mode in the prior art in which the device capability is controlled via a capability distribution table saved by the communication device, the communication system employs the mode in which a server directly controls the capability usage of a communication device. Specifically, the server employs a capability determination unit to determine the current capability usage situation by the device connected to the server, and then employs a capability control unit to control the capability usage of the device according to the capability situation. Thus, the capability control for the device can be realized only in the way of controlling the device passively and directly by the server. Therefore, in this embodiment, the device does not need to save a capability distribution table, and at the same time a module specifically responsible for parsing the capability distribution table can also be omitted, thereby simplifying the structure of the device. The communication device does not need to apply a capability from the server, thereby further avoiding the complex capability application process of the device and the time delay of the normal service configuration and operation.

The capability control unit may include a prohibition command sending unit and a collection command sending unit. The prohibition command sending unit is adapted to send, when the capability usage situation indicates the capabilities that exceed the capabilities limited by the capability control file, a capability prohibition command corresponding to the capabilities to the device. The capability control file may be a License file. The collection command sending unit is adapted to send a capability collection command to the device.

The first embodiment of the invention further provides a communication device including a port for device connection, a capability determination unit and a capability control unit. The capability determination unit is adapted to determine whether the summarized capabilities currently used by all the devices controlled by the communication device exceeds the corresponding capabilities limited in a capability control file, and to obtain a determination result. The capability control unit includes a prohibition command sending unit, which is adapted to send to the device, when the determination result indicates the capabilities that exceed the capabilities limited by the capability control file, a capability prohibition command corresponding to the capabilities via the port.

The communication device of the above embodiment of the invention, the capability usage of the device is controlled by directly controlling the device. Specifically, the device capability usage situation is obtained via the capability determination unit, and then the capability usage of the device is controlled according to the capability situation via the capability control unit. Thus, the capability control of the device can be realized only by controlling the device passively and directly by the server. Therefore, relative to the mode in the prior art in which a server needs to deliver a capability distribution table to a device, in this embodiment, no capability distribution table is needed to be delivered to a device for saving, nor is the processing of capability application of the device, further avoiding the complex capability application process of the device and the time delay of the normal service configuration and operation.

One embodiment of the invention provides a second communication device including a service processing unit and a capability prohibition unit. The service processing unit is adapted to perform service processing via a licensed capability, and the capability prohibition unit is adapted to prohibit, after receiving a capability prohibition command corresponding to the licensed capability, the service processing unit from subsequently using the capability.

The communication device controls the usage of capability of the device by directly receiving a capability control command. Specifically, after receiving the delivered capability prohibition command, the device passively conforms to the indication of the control command and prohibits the subsequent increase of the usage of the capability, thus realizing the capability control. Therefore, relative to the mode in the prior art in which a device needs to save a capability distribution table to perform capability control, in this embodiment, the communication device does not need to save a capability distribution table or a module specifically responsible for parsing the capability distribution table. Instead, what is only needed is to execute simply and directly a delivered capability control command without applying for a capability from the server, further avoiding the complex capability application process and the time delay of the normal service configuration and operation.

One embodiment of the invention provides a method for capability control as follows:

Step A: The current capability usage situation of a device is determined.

Step B: The capability usage of the device is controlled according to the capability usage situation.

In the above method for capability control according to the invention, the current capability usage situation of all the devices is firstly determined on the server, and then the usage of capability of the device is directly controlled according to the capability usage situation. Therefore, relative to the mode in the prior art in which a server needs to deliver a capability distribution table to a device, in this embodiment, the step of delivering a capability distribution table to the device for saving is not needed, nor is the step of specially parsing the capability distribution table. Instead, the device is controlled simply and directly. As a result, the process can be simplified, the capability control may be realized, and at the same time the complex capability application process of the device may be avoided, and further the time delay of the normal service configuration and operation may be avoided.

The invention is described in detail in conjunction with the embodiments and drawings.

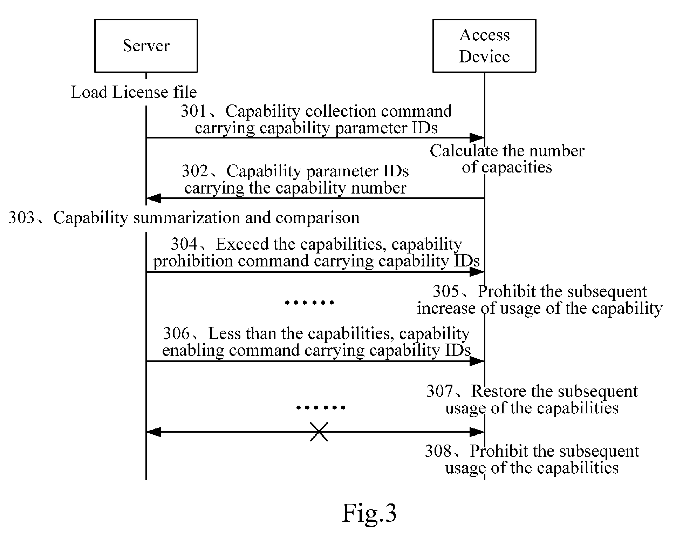

Referring to Fig.3, one embodiment of the invention provides a method for capability control. In this embodiment, it is illustrated in detail by taking a License server and access devices connected thereto as an example. An access device is referred to as a device below. In this embodiment, after a License file is loaded to the License server, the License server firstly parses the License file to get the general capability control parameter of the network and the product information (for example, Product X).

Step 301: The device is instructed to report its capabilities;

The License server delivers a capability collection command to all the access devices of Product X in the domination area of the server periodically (for example, once a day or once a week), occasionally or continuously, instructing these access devices to report their current capability. A capability parameter ID is attached to the collection command. The capability parameter ID is a character string defined during the development of Product X and is required as the ID of the capability parameter during the generation of License file. Therefore, the capability parameter ID can ensure a consistent understanding of a server and the access devices connected thereto towards a certain capability.

When the License server delivers a capability collection command, the License server may deliver all the capability parameter IDs at a time, or deliver one capability parameter ID at a time and collect the IDs separately. The collection can be done for a plurality of access devices at the same time, or for one access device firstly and then for another access device, which is specifically depending on the processing capability of the License server. If the processing capability is strong, all the capability parameter IDs may be delivered to all the access devices at the same time. If the processing capability is poor, one capability parameter ID may be delivered at a time, and the collection can be done for one access device firstly and then for another device.

Step 302: The capabilities are uploaded to the server, and are summarized to obtain the capabilities currently used by each access device;

After receiving the capability collection command, the access device calculates the capability number of the current device (if the server delivers a plurality of IDs at the same time, the access device needs to calculate for many times), because the access device can understand what capability is represented by the capability parameter ID. Subsequently, the access device uploads a message carrying the capability number to the License server, with a capability parameter ID attached to the message. After receiving the capability number, the License server sums the capability number uploaded by the access devices according to different capabilities as indicated by the capability parameter IDs.

Step 303: It is determined whether the capabilities currently used by the access device exceed the capabilities limited by the capability control file in the server connected to the access device, and a determination result of Exceeding, The Same or Less Than is obtained.

For example, the summarization result may be as follows:

summarized capability control parameter 1 = the number of capabilities of capability 1 uploaded by access device 1 + the number of capabilities of capability 1 uploaded by access device 2 + ... + the number of capabilities of capability 1 uploaded by access device N.

summarized capability control parameter 2 = the number of capabilities of capability 2 uploaded by access device 1 + the number of capabilities of capability 2 uploaded by access device 2 + ... + the number of capabilities of capability 2 uploaded by access device N.

summarized capability control parameter M = the number of capabilities of capability M uploaded by access device 1 + the number of capabilities of capability M uploaded by access device 2 + ... + the number of capabilities of capability M uploaded by access device N.

After collecting and summarizing the capability control parameters, the License server compares the summarized capability control parameter with the corresponding capability control parameter parsed from the License file and obtains a determination result of Exceeding, The Same or Less Than.

Step 304: When the determination result is The Same or Exceeding, the device is instructed to prohibit the subsequent increase of usage of the capability; and the usage of the capability by the access device may not be intervened when the determination result is Less Than.

If a certain capability control parameter from the parsing of the License file is less than or equal to the corresponding summarized capability control parameter, there is a need to deliver to the access device a command prohibiting the usage of the capability and to instruct the device to prohibit the subsequent increase of usage of the capability. The command carries the capability ID.

Step 305: After the instruction is received, the subsequent increase of the capability usage of the corresponding access device is prohibited.

After receiving the command, the access device determines the specific capability that needs to be limited according to the capability ID in the command, and then prohibits the subsequent increase of the capability usage, but the usage of the activated capability is not influenced.

For example: The capability ID of capability control parameter Y (1<=Y<=M) is "ADSL NUMBER", i.e., the number of ADSL subscribers. The value of capability control parameter Y from the parsing of the License file in the License server is 100,000. The License server finds, after a certain collection and summarization, that summarized capability control parameter Y is 110,000. Because 110,000 >100,000, the License server delivers a capability prohibition command to all or part of the access devices dominated by the License server itself, with the capability ID carried in the command being "ADSL NUMBER". After receiving the command, all or part of the access devices dominated by the License server prohibit the subsequent increase of usage of the capability. In other words, none of the subsequent access devices is allowed to add a new ADSL subscriber any longer. But the activated ADSL subscribers may not be deleted or processed otherwise by the access device. The License server may not deliver the additional 10,000 lines of information to the access devices. Instead, it may deliver command information to prohibit the subsequent increase of usage of a certain capability.

It may be seen from the above embodiments that the License server requires the access devices dominated by the License server to report the capabilities of the access devices, so that it can summarize the capabilities of all the current access devices. Then step 303 is conducted to determine whether the capabilities currently used by the access devices exceed the capabilities limited by the capability control file in the server connected to the access device. After obtaining the determination result, the License server can know whether there is a need to limit the capabilities of the access devices. Subsequently, when the capabilities need to be limited, steps 304 and 305 are performed to prohibit the access devices from subsequent additional usage of a certain capability. Therefore, the capability control is realized, at the same time, at least the following advantages are also found:

1) The access device does not save or parse the capability distribution table, thereby significantly decreasing the complexity of the capability control of the access device.

Neither the access device nor the License server saves a capability distribution table, and the capability parsing for each access device is no longer performed on the access device. Instead, the License server collects and summarizes the capabilities of all the access devices, and then compares the summarization result with the capabilities specified in the License file.

2) The capability detection and determination of the access device during the service configuration and operation process become simpler, in which it is only needed to determine the capability state, without the need of caring about the specific capability number.

3) Because the access device does not apply for a capability from the License server, no interaction processing exists during the service configuration and operation process. Thus, no service configuration time delay is caused.

Additionally, in additional embodiments, the following steps may be added:

Step 306: After the capability of the access device has been limited, the access device is instructed to restore the subsequent usage of the capability when the determination result in the next determination process is Less Than.

After a certain collection process, if the facts are found that a certain summarized capability control parameter has been less than the corresponding capability control parameter parsed from the License file and that an prohibition command has been delivered to the capability, a capability enabling command carrying the capability ID needs to be delivered at this point.

Step 307: The access device restores the subsequent usage of the capability after receiving the restoration command.

The above steps 306 and 307 are favorable for the access device to enable the subsequent increase of usage of the previous capability when no capability limitation is needed, so that the access device can continue to flexibly use the capability.

Additionally, in additional embodiments, the following steps may be added in addition to steps 301-305.

Step 308: The device prohibits the subsequent usage of the capability when no handshake message is received in a certain period.

The access device periodically performs handshake detection with the License server. If the handshake fails for a period, the access device halts the subsequent increase of usage of all the capacities. When the communication becomes normal again, the License server redelivers a new command after periodical collection, and the access device reset each capability state according to the new command. Thus, it may be prevented that the access device uncontrollably uses the capability when an unexpected event occurs.

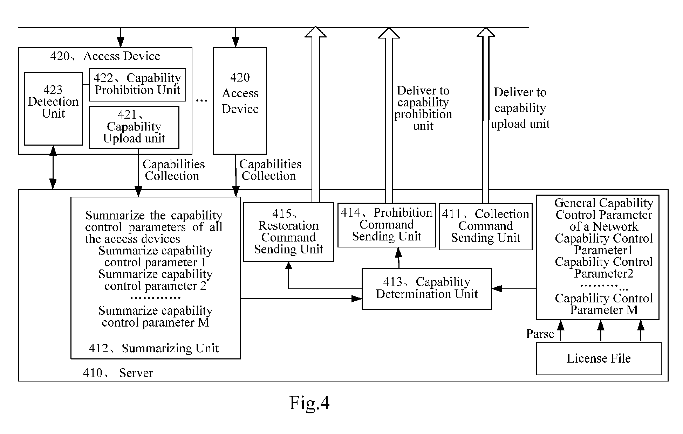

Referring to Fig.4, one embodiment of the invention further provides a communication system including a server 410 and an access device 420 connected thereto. A capability control file currently used by the access device 420 is provided in the server 410, and the server 410 includes a collection command sending unit 411, a summarizing unit 412, a capability determination unit 413 and a prohibition command sending unit 414. The access device 420 includes a capability upload unit 421 and a capability prohibition unit 422.

The collection command sending unit 411 is adapted to send to the access device 420 a capability collection command indicating the capability upload unit 421 to work. The summarizing unit 412 is adapted to summarize the uploaded and received capability of each access device 420 for determining the capabilities currently used by the access device 420. The capability determination unit 413 is adapted to determine whether the capabilities currently used by the access device 420 exceed the capabilities limited by a capability control file and to obtain a determination result of Exceeding, The Same or Less Than. The prohibition command sending unit 414 is adapted to send to the access device 420, when the determination result indicates that the capabilities equal or exceed the limited capabilities, a capability prohibition command corresponding to the capabilities.

The capability upload unit 421 is adapted to count the capability number of itself according to the capability collection command of the server 410 and to upload it to the server 410. The capability prohibition unit 422 is adapted to prohibit the subsequent increase of usage of the capabilities after receiving the prohibition command.

The server 410 further includes a restoration command sending unit 415, which is adapted to send to the access device 420, when the determination result indicates that the capability currently used by the access device 420 is less than the limited capability, a capability restoration command corresponding to the capabilities. Correspondingly, the access device 420 further includes a capability restoration unit, which is adapted to restore the subsequent usage of the capability after receiving the restoration command in the case that the subsequent usage of the capability is prohibited.

The access device 420 further includes a detection unit 423, which is adapted to detect the connection status between the access device 420 and the server 410, and to indicate the capability prohibition unit 422 to work when detecting a connection failure for a period.

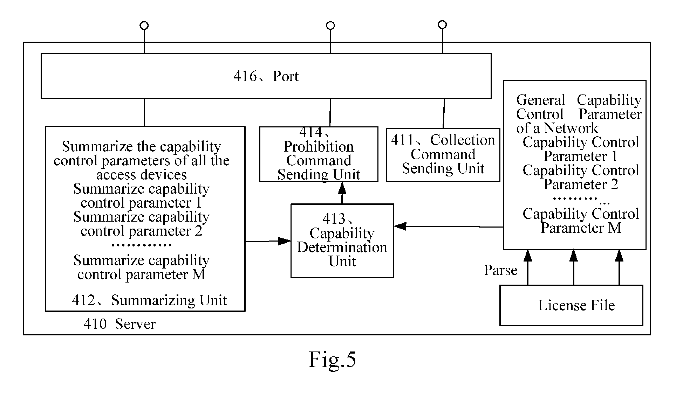

Referring to Fig.5, a communication device is provided according to the third embodiment of the invention. The communication device may be the server 410 in the communication system according to the second embodiment of the invention. The capability control file currently used by the access device 420 is provided in the communication device. The communication device includes a port for the connection of the access device 420, a collection command sending unit 411, a summarizing unit 412, a capability determination unit 413 and a prohibition command sending unit 414.

The collection command sending unit 411 is adapted to send to the access device 420 via the port a command indicating the capability collection is to be conducted. The summarizing unit 412 is adapted to summarize the capabilities of each access device 420 which has been uploaded via the port for determining the capabilities currently used by the access device 420. The capability determination unit 413 is adapted to determine whether the capabilities currently used by access device 420 exceed the capabilities limited by the capability control file, and to obtain a determination result. The prohibition command sending unit 414 is adapted to send to the access device 420 via the port, when the determination result indicates that the capabilities exceed the capabilities limited by the capability control file, a capability prohibition command corresponding to the capabilities.

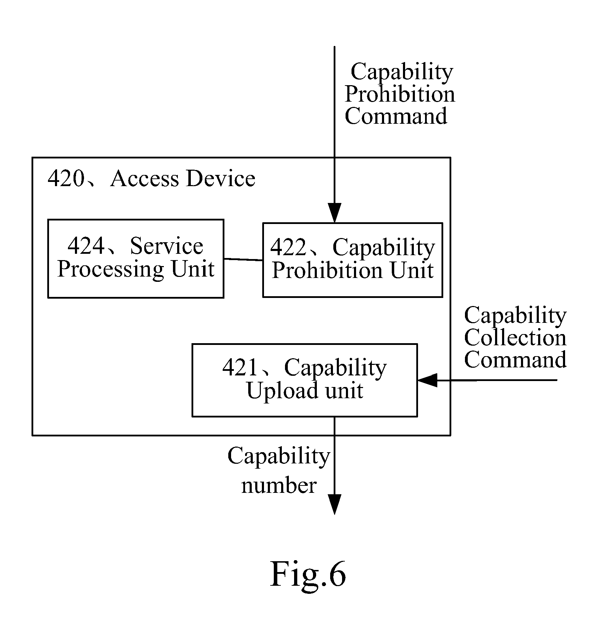

Referring to Fig.6, a communication device is provided according to the fourth embodiment of the invention. The communication device includes a service processing unit, a capability upload unit 421 and a capability prohibition unit 422. The capability upload unit 421 is adapted to count and upload the capability number of the current device. The service processing unit is adapted to perform service processing via a licensed capability. The capability prohibition unit 422 is adapted to prohibit, after receiving a capability prohibition command corresponding to the licensed capability, the service processing unit from subsequently using the capability.

In this solution, the access device 420 needs to realize the following functions:

1) Collecting the capability number according to the capability IDs from the server 410;

2) Changing the state of capability from available to unavailable according to the capability prohibition command delivered by the License server 410; and

3) Reading the capability available state for determination when capability control is needed during the service configuration and operation process. If the state is Prohibited, the access device 420 prohibits the subsequent increase of usage of the capability according to the available state of the capability.

In conclusion, relative to the prior art, the technical solutions according to the embodiments of the invention at least have the following advantages:

1) The access device 420 does not save or parse a capability distribution table, so that the complexity of capability control of the access device 420 is decreased greatly;

2) The capability detection and determination for the access device 420 is simpler during the service configuration and operation process. It is only needed to determine the capability state, without the need of caring about the specific capability number;

3) Because the access device 420 does not apply for a capability from the License server 410, no interaction processing exists during the service configuration and operation process. Thus, no service configuration time delay is caused.

Additionally, it is specified in the prior art that the access device 420 applies for a new capability from the server 410 real-timely when finding that the capability is insufficient during the service configuration and operation process. The subsequent service configuration and operation continues after the capability has been successfully applied for.

Additionally, the following modifications may be made to the prior art:

The maintainer of the access device applies for a capability of the access device by executing a command in advance. The unique mode for the access device to apply for a capability is to apply for a capability from the server via a command. After the application is successful, the access device updates the capability distribution table saved in the current device. When the access device finds that the capability is insufficient during the service configuration and operation process, the access device does not apply for a capability from the server. Instead, the access device directly halts the service configuration or operation corresponding to the capability and indicates the subscriber that failure occurs due to insufficient capability at the same time. To ensure the normal execution of the subsequent service configuration and operation, the maintainer needs to re-execute the capability application command to apply for a new capability from the server.

The problem of time delay of the access device during the service configuration and operation process may be overcome by the modified solution.

A communication system, a communication device and a method for capability control according to the embodiments of the invention have been illustrated in detail above. The principles and embodiments of the invention have been described with specific examples, but the above embodiments are only used for better understanding of the method of the invention and the core concept thereof. Meanwhile, various modifications and variations may be made to the specific embodiments and the application fields thereof by those skilled in the art without departing from the spirit or scope of the invention as defined by the appended claims and their equivalents. Therefore, the invention in its broader aspects is not limited to the specific details and representative embodiments shown and described herein.

## Claims

1. A communication system comprising a server for capability control, **characterized in that:**
the server comprises a summarizing unit, a capability determination unit and a prohibition command sending unit; and
the server communicates with at least one communication device comprising a capability upload unit and a capability prohibition unit; wherein:
the summarizing unit is adapted to collect and summarize capabilities currently used by the communication device and to send a summarization result to the capability determination unit;
the capability determination unit is adapted to compare the summarization result with capabilities specified in a license file and obtain a comparison result;
the prohibition command sending unit is adapted to send to the communication device, when the comparison result indicates that the summarization result equals or exceeds the capabilities specified in the license file, a capability prohibition command corresponding to the capabilities;
the capability upload unit is adapted to report, to the server connected to the communication device, information about the capabilities currently used by the communication device; and
the capability prohibition unit is adapted to prohibit the communication device from using corresponding capabilities according to the capability prohibition command delivered by the server.

2. The communication system according to claim 1, **characterized in that** the server further comprises:
a collection command sending unit adapted to send a capability collection command to each of the communication devices and instruct each of the communication devices to report currently used capabilities.

3. The communication system according to claim 1, **characterized in that** the server further comprises:
a restoration command sending unit adapted to send, when the next summarization result of prohibited capabilities is lower than the capabilities specified in the license file, a corresponding capability restoration command to each of the communication devices;
the communication device further comprises:
a capability restoration unit adapted to restore the prohibited capabilities after receiving the capability restoration command delivered by the server.

4. The communication system according to claim 1, **characterized in that** the communication device further comprises:
a detection unit adapted to detect the connection status between the communication device and the server and to instruct the capability prohibition unit to prohibit, when a connection failure is detected for a period, the communication device from subsequent additional usage of all the capabilities.

5. A server for capability control comprising a summarizing unit, a capability determination unit and a prohibition command sending unit, **characterized in that:**
the summarizing unit is adapted to collect and summarize capabilities currently used by each communication devices connected to the server and to send to the capability determination unit a summarization result;
the capability determination unit is adapted to compare the summarization result with capabilities specified in a license file and obtain a comparison result; and
the prohibition command sending unit is adapted to send, when the comparison result indicates that the summarization result equals or exceeds the capabilities specified in the license file, a capability prohibition command corresponding to the capabilities to each of the communication devices.

6. The server according to claim 5 **characterized by** further comprising:
a collection command sending unit adapted to send a capability collection command to each of the communication devices and to instruct each of the communication devices to report currently used capabilities.

7. The server according to claim 5 **characterized by** further comprising:
a restoration command sending unit adapted to send, when the next summarization result of prohibited capabilities is lower than the capabilities specified in the license file, a corresponding capability restoration command to each of the communication devices.

8. A communication device comprising a capability upload unit and a capability prohibition unit, **characterized in that:**
the capability upload unit is adapted to upload information about capabilities currently used by the communication device to a server connected to the communication device; and
the capability prohibition unit is adapted to prohibit the communication device from using corresponding capabilities according to a capability prohibition command delivered by the server.

9. The communication device according to claim 8 **characterized by** further comprising:
a detection unit adapted to detect the connection status between the communication device and the server and to instruct, when a connection failure is detected for a period, the capability prohibition unit to prohibit the communication device from subsequent additional usage of all the capabilities.

10. The communication device according to claim 8 **characterized by** further comprising:
a capability restoration unit adapted to restore the prohibited capabilities after receiving a capability restoration command delivered by the server.

11. A method for capability control **characterized by** comprising the steps of:
obtaining capabilities currently used by each communication device connected to a server;
summarizing the capabilities currently used by each of the communication devices and comparing a summarization result with capabilities specified in a license file; and
prohibiting, when the summarization result equals or exceeds the capabilities specified in the license file, each of the communication devices from subsequent additional usage of the capabilities.

12. The method for capability control according to claim 11, **characterized in that** the step of obtaining the capabilities currently used by each communication device connected to a server comprises the step of:
instructing each of the communication devices to report currently used capabilities.

13. The method for capability control according to claim 11 **characterized by** further comprising, after the step of prohibiting each of the communication devices from subsequent additional usage of the capabilities, the step of:
instructing, when the next summarization result of the capabilities of the communication devices is lower than the capability specified in the license file, each of the communication devices to restore usage of the prohibited capabilities .

14. The method for capability control according to claim 11 **characterized by** further comprising:
prohibiting, when failure occurs in communication between the server and the communication devices, the communication device from subsequent additional usage of all the capabilities.
